# FASCICULE DE BREVET EUROPEEN

(11) **EP 1 410 360 B1**
(45) Date de publication et mention de la délivrance du brevet: **02.01.2019**
(21) Numéro de dépôt: 02764929.2
(22) Date de dépôt: 25.06.2002
(51) Int. Cl.: G08C 19/28, H04Q 9/00, G08C 17/02

(54) **PROCEDE D'APPARIEMENT D'EMETTEUR ET DE RECEPTEUR**
VERFAHREN ZUR ZUORDNUNG VON SENDER ZU EMPFÄNGER
METHOD FOR TRANSMITTER AND RECEIVER MATCHING

(30) Priorité: 13.07.2001 FR 0109369
(43) Date de publication de la demande: 21.04.2004
(73) Titulaire: SOMFY ACTIVITES SA, 74300 Cluses (FR)
(72) Inventeur: GAUTHIER, Laurent, F-31500 Toulouse (FR); SYMOEN, Lionel, F-74800 La Roche sur Foron (FR); FOURNET, Michel, F-74350 Cuvat (FR); CHERON, Eric, F-74440 Tanninges (FR); NEUMAN, Serge, F-74600 Seynod (FR)
(74) Mandataire: Verriest, Philippe
(86) Numéro de dépôt international: PCT/FR2002/002194
(87) Numéro de publication internationale: WO 2003/007265

(56) Documents cités:
- EP-A1- 0 574 636
- WO-A-01/71685
- US-A- 5 767 784
- US-A- 5 945 936

## Description

L'invention concerne le domaine des émetteurs et récepteurs, et notamment des émetteurs et récepteurs des systèmes domotiques.

De tels systèmes sont utilisés pour les produits motorisés ou des automatismes de fermeture ou de protection solaire dans le bâtiment, ou encore pour les commandes de luminaires ou autres. Typiquement, on prévoit un ou plusieurs émetteurs; chaque dispositif à commander - volet roulant, store, luminaire, etc - est associé à un récepteur. Les émetteurs et les récepteurs radio utilisent une même fréquence de transmission. Pour ces dispositifs, et notamment pour les produits motorisés ou des automatismes de fermeture ou de protection solaire dans le bâtiment, des raisons logistiques nécessitent le plus souvent que l'appariement ne soit pas réalisé à la fabrication, mais plutôt sur chantier, après installation des produits.

De manière générale, le récepteur radio est susceptible d'apprendre au moins une adresse - ou code, ou numéro d'identité - qui identifie un émetteur, lorsqu'il est placé dans un mode d'apprentissage particulier. Un tel fonctionnement est décrit dans US-A-4 750 118 (Heitschel 1985). Quand le récepteur est accessible, il est aisé d'utiliser par exemple un bouton spécifique, ou une procédure particulière sur un bouton normalement affecté à un autre usage, pour faire entrer le récepteur en mode d'apprentissage. On émet alors un message depuis l'émetteur à apparier, avant l'expiration d'une durée prédéterminée, ou avant de refaire passer le récepteur en mode de fonctionnement normal. Le récepteur en mode d'apprentissage sait alors qu'il doit mémoriser le code adresse contenue dans la trame de signal reçu. Ainsi l'émetteur utilisé pour envoyer ce signal se voit-il mémorisé par le récepteur sous forme de numéro d'identité. Un tel procédé est mis en oeuvre par la demanderesse dans ses produits vendus sous la référence Centralis Uno RTS.

Le document US-A-5767784 décrit un procédé d'appariement pour un récepteur et un émetteur en plaçant le récepteur voulu dans un mode de programmation, à l'aide d'un commutateur de programme. La procédure d'appariement commence lorsque le commutateur de programme est activé et s'achève lorsque le commutateur de programme est désactivé.

Le document US-A-5945936 décrit une routine d'appariement entre un émetteur et un récepteur dont la première étape est la mise en mode d'apprentissage du récepteur par action de l'installateur sur le récepteur.

Plutôt que d'agir sur une commande spécifique de programmation, on a pensé pouvoir transmettre directement l'ordre de mise en mode d'apprentissage à partir de l'émetteur lui-même. Dans ce cas, tous les émetteurs possèdent un numéro d'identité différent, mais contiennent un même code, reconnu par tout récepteur, pour la mise en programmation des récepteurs. La réception par un récepteur du code de mise en mode d'apprentissage et du numéro d'identité d'un émetteur permet d'apparier cet émetteur au récepteur. C'est donc sans avoir besoin de manipuler le récepteur que l'installateur le fait entrer en mode d'apprentissage, en utilisant par exemple un bouton spécifique de l'émetteur qui transmet alors à la fois le code de mise en apprentissage et son numéro d'identité. Cette solution est mise en oeuvre dans le produit vendu par la demanderesse sous la référence Telis. Cette solution peut poser un problème lorsque plusieurs récepteurs se trouvent à portée de l'émetteur. Dans ce cas, tous vont apprendre l'identité d'un émetteur supposé commander un seul d'entre eux.

Pour résoudre ce problème de désignation, plusieurs solutions ont déjà été proposées, à la fois pour le cas d'un premier appariement, mais aussi pour les cas de commandes de groupes de produits, ou de remplacement d'un émetteur par un autre en cas de perte etc... On en trouvera deux exemples dans FR-A-2 772 171 (Gauthier 1998) et FR-A-2 792 443 (Symoen 1999).

Il faut noter qu'une fois un premier appariement fait sur l'ensemble de l'installation, des techniques connues permettent ultérieurement de faire passer spécifiquement un seul des récepteurs en mode apprentissage pour qu'il apprenne l'identité d'un deuxième ou d'une pluralité d'autres émetteurs susceptibles de le commander également. Un exemple d'une telle technique est donné dans EP-A-0 867 848.

Enfin, le développement de circuits spécialisés de type émetteur-récepteur radio (« transceiver » en langue anglaise) et supportant un protocole de type réseau rendrait possible une solution dans laquelle l'installateur est muni d'une console de programmation. Chacun des récepteurs précédents est alors également émetteur, et la console de programmation est alors non seulement émettrice mais également réceptrice. En phase d'appariement, les récepteurs envoient vers la console un numéro d'identification qui leur est propre. Le logiciel contenu dans la console permet d'ordonner les récepteurs qui se sont annoncés. L'installateur a alors la possibilité d'envoyer, de manière successive, une commande qui ne sera reconnue que par le seul récepteur concerné, et de procéder à l'appariement de ce récepteur, qui s'est ainsi identifié physiquement en répondant à ladite commande, avec l'émetteur destiné par la suite à le commander.

Cependant, bien que simple à mettre en oeuvre, cette solution nécessite un outil spécifique de programmation, ce qui est une contrainte forte pour de petites installations.

WO-A-01 71685, revendiquant une priorité antérieure à la présente demande, mais publiée postérieurement décrit un ensemble d'appareils différents aptes à communiquer avec une unité de commande à distance sur des liaisons bidirectionnelles. Chacun des appareils se voit affecter un code d'appareil unique, qui est attribué par le protocole de transmission sans fil. Ce document ne détaille pas plus l'affectation du numéro unique.

Il existe donc un besoin d'un procédé fiable, simple et rapide d'appariement d'un émetteur à un récepteur. Ce procédé devrait aussi fonctionner lorsque le récepteur est un récepteur parmi une pluralité de récepteurs; idéalement, ce procédé ne nécessite pas d'intervention sur le récepteur.

L'invention est définie par le procédé et le récepteur définis dans les revendications.

D'autres caractéristiques et avantages de l'invention apparaîtront à la lecture de la description qui suit, donnée à titre d'exemple et en référence aux dessins qui montrent
- figure 1, une vue schématique d'une installation selon un premier mode de réalisation de l'invention ;
- la figure 2, un ordinogramme d'un premier mode de réalisation d'un procédé selon l'invention;
- la figure 3, un ordinogramme d'un autre mode de réalisation d'un procédé selon l'invention;
- figure 4, une représentation schématique d'un récepteur selon un mode de réalisation de l'invention.

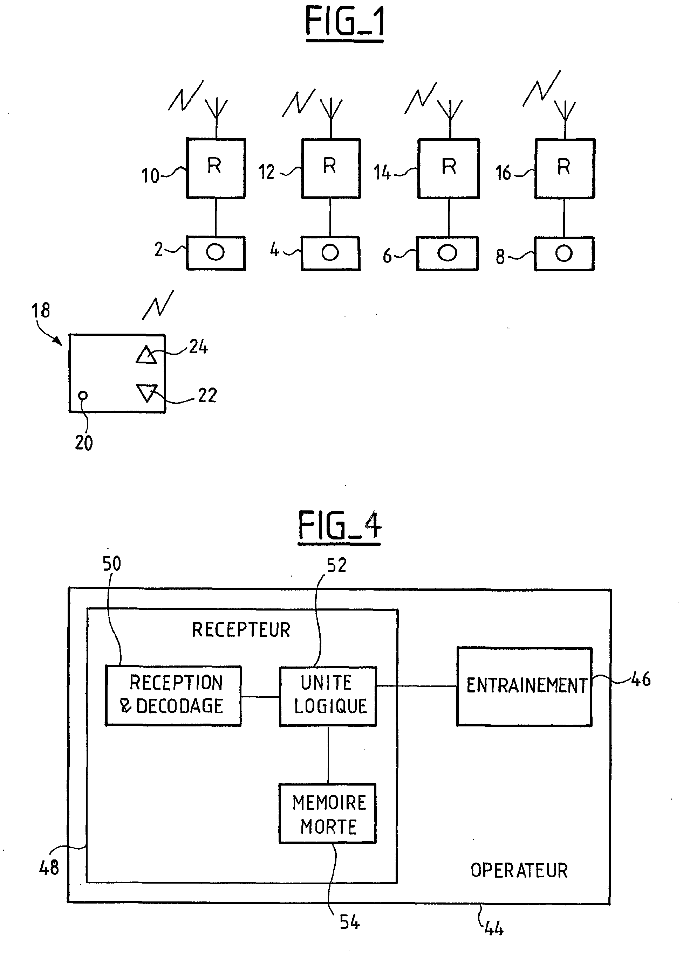

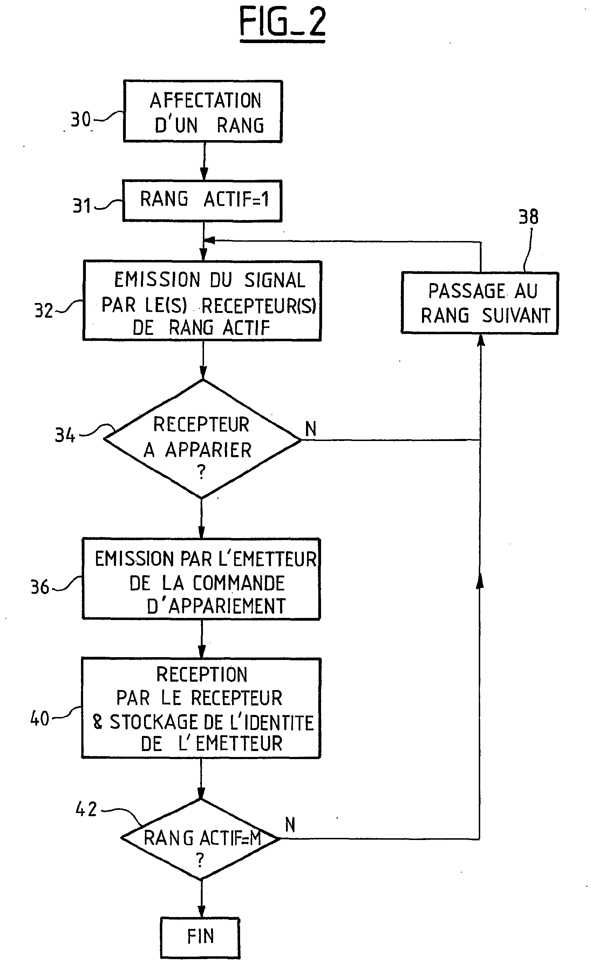

On décrit d'abord en référence aux figures 1 et 2 un exemple de mise en oeuvre de l'invention, dans lequel les récepteurs ne sont pas reliés les uns aux autres. On décrit ensuite un autre exemple dans lequel les récepteurs sont susceptibles de communiquer les uns avec les autres.

La figure 1 montre une installation dans un premier exemple de mise en oeuvre de l'invention. L'installation comprend une pluralité d'opérateurs 2, 4, 6 et 8, référencés par la lettre "O" sur la figure. Les opérateurs peuvent, par exemple enrouler ou dérouler des stores ou des volets roulants, actionner un luminaire, ouvrir une porte, enclencher ou déclencher une alarme, etc. A chaque opérateur est relié un récepteur 10, 12, 14 ou 16, référencé par la lettre "R" sur la figure. Chaque récepteur présente une antenne qui lui permet de recevoir depuis un émetteur des ordres transmis par voie hertzienne. La transmission par radio des ordres depuis un émetteur vers un ou plusieurs récepteurs est connue en soi et n'est pas décrite plus en détail ici. La figure 1 montre encore un émetteur. Cet émetteur est adapté à transmettre par voie hertzienne des ordres à destination des récepteurs 10, 12, 14 ou 16. Il présente avantageusement un numéro d'identification unique, qui est transmis en même temps qu'un ordre, et qui permet au récepteur de reconnaître l'origine de l'ordre.

L'émetteur est adapté à émettre au moins deux ordres différents vers les récepteurs. La solution la plus simple consiste à prévoir au moins deux boutons, une pression sur un bouton provoquant l'émission d'une commande. Dans l'exemple de la figure 1, sont prévus trois boutons 20, 22 et 24, le bouton 20 provoque l'émission d'une commande de programmation ; le bouton 22 provoque l'émission d'une commande de descente du store ou du volet enroulé sur l'opérateur ; le bouton 24 provoque l'émission d'une commande de montée du store ou volet. Comme expliqué plus haut, dans une installation du genre de celle de la figure 1, un problème qui se pose est celui de l'appariement des émetteurs et des récepteurs. Autrement dit, le problème est d'associer à un émetteur un des récepteurs, de sorte que les commandes émises par l'émetteur soient exécutées par le récepteur. Comme indiqué plus haut, il existe des solutions connues en soi pour associer ensuite à un récepteur un deuxième émetteur.

L'invention propose de procéder à cette association par "butinage" (en langue anglaise "zapping"). A cet effet, les récepteurs ou les opérateurs associés émettent successivement un signal à l'attention de l'utilisateur. L'utilisateur peut, en fonction du signal, provoquer l'émission d'une commande par l'émetteur et ainsi apparier l'émetteur au récepteur.

Le signal émis par les récepteurs ou les opérateurs peut être un signal quelconque, dans la mesure où il est perçu par l'utilisateur. Il est possible par exemple que l'opérateur se déplace alternativement dans un sens et dans l'autre, sur une faible distance, comme mentionné dans les brevets FR-A-2 728 615 ou FR-A-2 728 700. Il est aussi possible, si le butinage est provoqué par une pression sur une touche, que le signal soit, pour le récepteur concerné, simplement la manoeuvre correspondant à la touche de touche utilisée: s'il s'agit de la touche descente, le récepteur descend tant que cette touche est pressée.

Le signal peut être un signal sonore si le récepteur ou l'opérateur associé est muni d'une source sonore. Le signal peut être un signal lumineux - par exemple le clignotement d'une diode, si le récepteur ou l'opérateur associé est pourvu d'une source lumineuse. Dans la suite, on considère à titre d'exemple le cas où le signal est un signal visuel de déplacement suivant des directions alternatives du store ou du volet entraîné par l'opérateur.

La figure 2 montre un ordinogramme d'un procédé d'appariement dans une installation du type de celle de la figure 1. Dans une première étape 30, chacun des différents récepteurs ou opérateurs détermine un rang ou numéro d'ordre pour l'envoi d'un signal. Dans l'ordinogramme de la figure 2, les différents récepteurs déterminent ce numéro d'ordre indépendamment les uns des autres. Cette étape peut s'effectuer de diverses manières. Elle ne concerne que des récepteurs non encore appariés.

Cette étape peut commencer sur sollicitation de l'émetteur, ou spontanément. Dans le premier cas, l'émetteur peut être actionné par l'installateur pour émettre un signal de début d'appariement. On peut prévoir un bouton spécifique à cet effet. Il est plus simple d'utiliser une séquence de pressions sur les boutons de l'émetteur pour provoquer l'émission de la commande de début d'appariement. Cette solution évite de munir l'émetteur d'autant de boutons que de fonctions et peut simplement être mise en oeuvre par une programmation appropriée de l'émetteur. On peut encore utiliser toutes les autres solutions possibles, par exemple par action sur l'alimentation électrique des opérateurs et récepteurs. Dans l'exemple de la figure 1, le début d'appariement peut être indiqué par une succession de pressions des touches 22 et 24, suivant une séquence donnée.

Dans l'exemple le plus simple, les récepteurs ou opérateurs choisissent aléatoirement un numéro dans une liste. On peut par exemple procéder au choix d'un numéro de passage parmi M numéros possibles; une valeur possible de M est 10; cette valeur est de préférence supérieure au nombre de récepteurs ou d'opérateurs, de sorte à assurer un bon rendement à l'appariement. La durée du processus d'appariement est une fonction croissante de la valeur M; le choix de cette valeur est un compromis entre le rendement et la durée du processus d'appariement. Une valeur de M de 10 convient, notamment pour les installations de stores ou volets roulants.

Cette solution est la plus simple ; elle n'évite pas nécessairement que deux récepteurs ou opérateurs choisissent le même numéro. Pour diminuer une telle possibilité de collision, on peut limiter les choix possibles d'un récepteur ou d'un opérateur, voire effectuer un choix purement déterministe. Une solution est d'utiliser un numéro spécifique au récepteur pour un calcul, par exemple, on pourrait imposer qu'un récepteur dont le numéro spécifique est pair ou respectivement impair choisisse un numéro dans la liste qui soit respectivement pair ou impair. On peut aussi calculer un numéro d'ordre à partir du numéro spécifique du récepteur, par exemple pour le calcul du numéro spécifique du récepteur modulo le nombre de rangs dans la liste. Cette dernière solution, purement déterministe, n'est pas en soi de nature à supprimer avec certitude tout risque de collision. Elle peut toutefois réduire la probabilité d'une collision - par exemple si l'on suppose que les numéros spécifiques des récepteurs d'une installation neuve ont des chances d'être des numéros consécutifs.

A l'issue de l'étape 30, d'une façon aléatoire, partiellement déterministe, ou parfaitement déterministe, les récepteurs ou les opérateurs sont affectés d'un numéro d'ordre, ou rang, dans une liste commune à tous les récepteurs.

Chaque récepteur contient dans une mémoire un compteur interne, indiquant le rang actif dans le processus qui va suivre.

Dans une étape d'initialisation 31, le rang actif devient le premier numéro de la liste.

A l'étape 32, le récepteur ou les récepteurs ou opérateurs présentant un rang égal au rang actif émettent un signal. A l'étape 34, l'installateur détermine si le récepteur ou l'opérateur qui a émis un signal est celui qui doit être apparié à l'émetteur. Si tel est le cas, on passe à l'étape 36. Sinon, on passe à l'étape 38.

A l'étape 36, l'installateur a déterminé que le récepteur ou l'opérateur qui a émis le signal est celui qui doit être apparié avec l'émetteur. L'installateur émet une commande d'appariement à l'aide de l'émetteur. Dans l'exemple de la figure 1, cette commande peut être émise en appuyant sur le bouton 20 de programmation. Le programme passe à l'étape 40.

A l'étape 40, les récepteurs ou opérateurs reçoivent la commande d'appariement émise à l'étape 36. Celui des récepteurs ou opérateurs qui vient d'émettre un signal à l'étape 32 considère alors qu'il est apparié à l'émetteur : il stocke le numéro de l'émetteur qui vient d'émettre la commande d'appariement, tel qu'il est lu dans la commande. L'appariement est alors effectué pour l'émetteur en cause, il peut bien sûr être répété pour d'autres émetteurs qui devraient être appariés avec ce même récepteur.

Après cette opération d'appariement, on passe à l'étape 42, dans laquelle est testé le rang actif pour savoir si l'ensemble de la liste a été parcouru, auquel cas le procédé est terminé, au moins pour l'ensemble des émetteurs qui ont pu être appariés. Si ce n'est pas le cas, on passe à l'étape 38, pour itération.

A l'étape 38 on passe au rang suivant. Comme indiqué plus haut, il peut s'agir d'un passage spontané, par exemple après une temporisation; il peut aussi s'agir d'un passage sur sollicitation de l'émetteur. Dans ce dernier cas, le passage au rang actif suivant est commandé par une pression de l'installateur sur une ou plusieurs des touches de l'émetteur. On peut par exemple pendant la phase de zapping, donner une autre signification aux touches de fonction normalement affectées à aux ordres de montée et descente : l'une servant alors à se déplacer d'un rang actif à l'autre par incrémentation, l'autre servant à se déplacer d'un rang à l'autre par décrémentation. Sur réception de ces signaux, les récepteurs déterminent à tout instant la valeur commune du rang actif.

On peut aussi décider qu'un récepteur dont le numéro d'ordre correspond à un rang actif donné réagit normalement aux ordres qu'il reçoit par appui maintenu sur les touches de télécommande descente puis montée ou inversement. Le passage d'un rang à l'autre peut alors avoir lieu lors de deux appuis consécutifs sur une même touche. On peut encore prévoir une incrémentation ou une décrémentation des rangs.

On comprend que l'ordinogramme de la figure 2 se poursuit dans le pire des cas jusqu'à avoir balayé l'ensemble des rangs possibles; à cet instant, tout récepteur à apparier a nécessairement réagi et émis un signal.

Il reste possible que deux récepteurs ou opérateurs présentent le même rang et réagissent ensemble. Dans ce cas, l'installateur devra recommencer l'ensemble du processus, mais seuls les récepteurs non encore appariés seront concernés.

Les récepteurs peuvent être programmés pour constater qu'aucune commande d'appariement n'a été émise suite à leur émission d'un signal. Il est alors possible, pour ces récepteurs, de changer l'affectation des numéros d'ordre, s'il s'agit d'une affectation déterministe ou partiellement déterministe. Ce changement de mode d'affectation sera activé dans l'étape 30 du processus suivant. Ceci évite que lors du processus suivant, les deux mêmes récepteurs réagissent à nouveau ensemble.

En pratique, on comprendra que l'installateur peut commencer le processus de la figure 2, apparier le premier récepteur avec un émetteur, puis poursuivre le processus pour apparier un autre récepteur avec un autre émetteur. L'installateur peut aussi réaliser un appariement dès qu'il constate que son émetteur agit sur un récepteur et un seul, peu importe que ce soit celui devant lequel il se trouve. Ceci accélère considérablement l'appariement. En effet, le nombre de récepteurs à apparier diminue lors de chaque balayage des numéros d'ordre possibles. Dans ces conditions, l'appariement global est beaucoup plus rapide encore.

Avec le procédé décrit à la figure 2, la probabilité que le choix aléatoire fait par un récepteur ne soit pas également celui d'un autre récepteur est donnée par ((M-1)/M)^(P-1)).

Pour P=3 et M=5, il y a (4/5)^2 soit 16 chances sur 25 (64%) qu'un récepteur soit seul avoir choisi un numéro d'ordre donné. Cette valeur est de (7/8)^4 (60 %) pour P=5 et M=8.

La probabilité augmente significativement d'un tour à l'autre si ce tour permet de réaliser au moins un appariement; on entend ici par "tour" un balayage de l'ensemble des numéros d'ordre possibles. Par exemple, pour M=10, et P valant successivement 6, 5, 4, et 3 les probabilités sont respectivement égales à 59 %, 65 %, 73 %, 81 %. Ceci démontre la faisabilité pratique de l'appariement proposé, même dans le cas où l'installateur recherche à apparier un récepteur donné avec l'émetteur qu'il utilise.

Enfin, il est possible de prévoir une sortie anticipée du mode d'appariement, pour le cas où tous les récepteurs auraient pu être appariés avant d'avoir atteint le nombre de rangs de la liste. Cette sortie anticipée est réalisée par exemple au moyen d'une commande spécifique ou d'une combinaison de commandes de l'émetteur. La détection de cette commande vient compléter le test 42 de la figure 2.

Le procédé de la figure 2 permet d'apparier simplement un récepteur et un émetteur. Il peut être utilisé pour apparier un récepteur parmi une pluralité de récepteurs. Il est parfaitement adapté à des installations présentant un nombre limité de récepteurs. Toutefois, il peut présenter un inconvénient si l'installateur n'est pas en mesure de constater la simultanéité des signaux émis par deux récepteurs; ce peut notamment être le cas, pour une installation avec des volets roulants, si les volets sont dans des pièces différentes. Le procédé décrit maintenant permet d'assurer l'appariement, même dans ce cas.

Le procédé de ce deuxième exemple diffère du procédé de la figure 2 par l'étape 30 de détermination d'un numéro d'ordre. Dans ce deuxième exemple, on suppose que les récepteurs sont aptes à communiquer les uns avec les autres, pour que le choix du numéro d'ordre s'effectue sans que deux récepteurs ne se voient affectés du même numéro d'ordre.

A cette fin, on suppose que les récepteurs sont aptes à communiquer les uns avec les autres. Ceci peut être assuré en munissant chaque récepteur d'un émetteur récepteur permettant la communication entre récepteurs. Cette communication est établie dans une structure en réseau, connue de l'homme de métier. La structure du réseau est indifférente, dès lors que les récepteurs peuvent communiquer, directement ou indirectement. Chaque récepteur émet donc des requêtes, et reçoit - à moins qu'il ne soit seul - des réponses des autres récepteurs. Il existe plusieurs possibilités d'auto-ordonnancement des récepteurs, dès lors qu'ils peuvent communiquer.

Par exemple, pour un premier mode d'exécution, lors d'une phase d'initialisation, les récepteurs tirent séparément un nombre pseudo-aléatoire avant d'émettre. Un récepteur n'émet que si le délai correspondant à ce nombre pseudo-aléatoire est écoulé : il annonce alors aux autres récepteurs son numéro d'ordre, égal au précédent qu'il a capté de la part d'un autre récepteur, incrémenté d'une unité. Si deux émissions ont lieu simultanément, le conflit est détecté et les fautifs passent leur tour pour recommencer par la suite avec d'autres tirages aléatoires.

Pour un deuxième mode d'exécution, lors de la phase d'initialisation, les récepteurs ne tirent pas au hasard le nombre qui temporise leur intervention sur le « réseau », mais utilisent leur numéro de série propre, chaque récepteur étant numéroté lors de la fabrication, pour calculer ce retard. Cette procédure allonge la durée de la phase d'initialisation, mais évite la mise en place d'une gestion des collisions.

Plus généralement, on peut utiliser toute technique permettant d'assurer l'ordonnancement des récepteurs.

En adaptant la première technique, ou la deuxième, au cadre de l'invention, on obtient donc cette fois un ordonnancement des récepteurs par entiers consécutifs de 1 à P, avec P le nombre de récepteurs.

La séquence de programmation devient très simple pour l'installateur :
- lors de chaque appui successif de la touche de télécommande de l'émetteur qu'il tient entre les mains (par exemple la touche de descente), c'est l'un ou l'autre des récepteurs vierges de l'installation qui répond, cette fois un seul à la fois, et sans « blancs » (appuis inopérants).

En pratique, l'installateur pourra simplement rester sur place et appuyer au plus P fois, pour que réagisse le récepteur qui est face à lui.

La description donnée en référence à la figure 2 est un exemple d'une méthode permettant de parcourir l'ensemble des récepteurs, suivant un balayage suivant une dimension : les récepteurs se voient affecter un numéro d'ordre, qui permet un ordonnancement des émetteurs. On peut aussi utiliser d'autres méthodes pour parcourir l'ensemble des récepteurs, fournir des signaux à l'utilisateur et lui permettre d'indiquer si le récepteur à apparier a fourni le signal ou non.

Ainsi, on peut représenter l'ensemble des récepteurs par les feuilles d'un arbre. Le choix d'un récepteur s'effectue alors en parcourant l'arbre, jusqu'à atteindre la feuille qui correspond au récepteur à apparier. On peut utiliser pour parcourir l'arbre tout algorithme, dans la mesure où l'émetteur peut fournir un message pour chaque réponse attendue dans l'algorithme. L'avantage d'une telle représentation est de pouvoir utiliser facilement un algorithme d'une complexité en log₂(n), où n est le nombre de récepteur.

Généralement, on peut représenter l'ensemble des récepteurs par un graphe, i. e. par un ensemble de sommets reliés par des arêtes. Le choix d'un récepteur revient à parcourir le graphe, par un algorithme de parcours. Cet algorithme peut être quelconque dans la mesure où les réponses attendues peuvent être fournies par l'émetteur.

Plus généralement encore, on peut utiliser tout algorithme pour parcourir l'ensemble des récepteur, toujours sous la condition que les interrogations soient adressées à l'utilisateur par les signaux des récepteurs et les réponses fournies par l'émetteur.

Dans l'exemple de la figure 2, le graphe est purement linéaire, et l'algorithme de parcours du graphe consiste à balayer le graphe linéaire. On détaille d'autres modes de réalisation ci-dessous.

La création du graphe ou de l'arbre peut être automatique ou non, basée sur une propriété innée ou héritée de l'environnement. Le graphe peut être dynamique ou statique.

La création du graphe peut être automatique. Par exemple, lors de la mise sous tension, les récepteurs sont ordonnés selon le principe que le premier qui émet est premier dans la liste. On obtient ainsi une liste de récepteurs, qui peuvent être représentés par les feuilles d'un arbre. La création du graphe peut aussi ne pas être automatique : chaque récepteur est par exemple muni d'un commutateur qui permet de le numéroter et de lui affecter un numéro d'ordre dans le réseau, avant que ce récepteur ne soit mis en place et devienne donc généralement inaccessible ou peu accessible pour l'installateur au moment où il voudra procéder à d'ultérieures opérations d'appariement. Dans un tel cas, l'installateur, avant de monter les récepteurs pourrait régler le commutateur de chaque récepteur. Il n'est pas alors nécessaire que le récepteur soit même relié au secteur ou alimenté, si le commutateur est manuel. Dans la suite, le commutateur est uniquement utilisé pour faciliter l'ordonnancement des récepteurs ou plus généralement la création du graphe. Cette solution simplifie la création du graphe; comme l'appariement s'effectue ensuite, mais pas sur la base du commutateur, on préserve une très forte sécurité. Il n'est pas non plus nécessaire de prévoir un commutateur complexe ou présentant une grande plage de réglage : il suffit typiquement que le commutateur présente un nombre de positions suffisant pour une installation moyenne; par exemple, on peut simplement prévoir deux roues à 10 positions, pour cent récepteurs.

La création du graphe peut résulter d'une propriété innée ou acquise, dans le cas où l'on utilise des propriétés du récepteur pour l'ordonnancement. Dans l'exemple de la figure 2, comme décrit plus haut, on peut calculer un numéro d'ordre à partir du numéro spécifique du récepteur, pour réduire les collisions. Cette solution repose sur l'utilisation d'une propriété innée ou intrinsèque du récepteur. On pourrait aussi utiliser une propriété héritée de l'environnement : par exemple, pour un capteur de lumière, la valeur d'éclairement mesurée peut être utilisée pour l'ordonnancement des récepteurs.

Le graphe peut être dynamique ou statique. Un exemple de graphe dynamique consiste à prévoir que chaque opération d'appariement sort du graphe le récepteur d'ordres qui vient d'être apparié. Dans un exemple de graphe statique, on ne modifie pas le graphe lorsqu'un récepteur est apparié. Dans l'exemple de la figure 2, cette deuxième solution conduirait à parcourir la liste des récepteurs jusqu'à apparier le premier récepteur; pour l'appariement d'un deuxième récepteur, on parcourt à nouveau la liste des récepteurs, y compris le récepteur qui vient d'être apparié. Cette deuxième solution est plus simple, dans la mesure où il n'est pas nécessaire de modifier le graphe. Toutefois, un graphe dynamique peut réduire la durée d'appariement, notamment pour les derniers récepteurs de l'ensemble.

Un autre exemple de graphe dynamique consiste à prévoir un nouveau graphe lors de chaque appui de touche. Un exemple de tel système heuristique est donné maintenant, dans l'exemple de récepteurs de volets roulants. Lors d'un premier appui sur Stop, chaque moteur décide de monter ou descendre. L'installateur est placé devant l'un des volets roulants. A l'aide de la touche Montée ou Descente, il indique dans quel sens il voit bouger son volet. Tous les produits qui allaient en sens inverse s'arrêtent. Tous ceux qui étaient dans le bon sens partent aléatoirement dans un sens ou l'autre. Le procédé continue jusqu'à ce que le volet soit le seul à bouger. L'appariement devient alors possible.

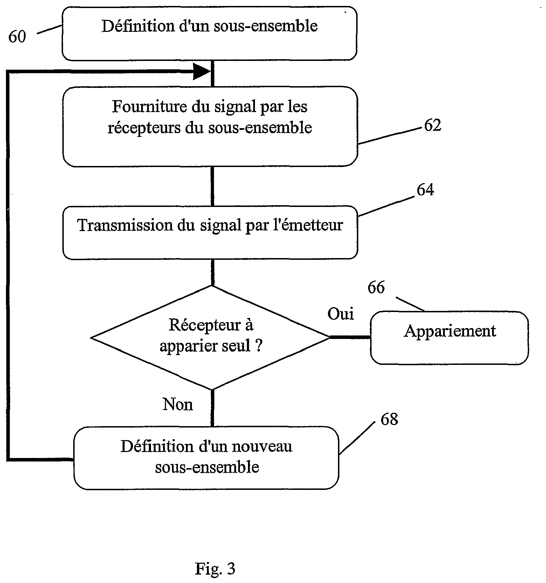

La figure 3 montre un ordinogramme d'un mode de réalisation de l'invention. A l'étape 60, on définit un sous-ensemble parmi l'ensemble des récepteurs; comme indiqué plus haut, on peut simplement considérer une moitié des récepteurs, choisie de façon déterministe ou aléatoire.

A l'étape 62, les récepteurs du sous-ensemble fournissent le signal à l'attention de l'installateur.

A l'étape 64, en fonction de la présence du récepteur à apparier parmi les récepteurs ayant fourni le signal, l'installateur transmet un signal, à l'aide de l'émetteur. Il peut aussi s'abstenir de fournir un signal pendant un temps donné : de ce point de vue, l'absence de signal peut être considérée comme un signal.

Si le récepteur à apparier est seul à avoir fourni le signal, on passe à l'étape 66. A cette étape, le récepteur est apparié, et l'appariement est terminé. On peut bien sûr si nécessaire poursuivre le procédé pour l'appariement d'un autre récepteur. Le passage de l'étape 64 à l'étape 66 peut s'effectuer sur réception d'un signal d'appariement envoyé par l'émetteur. Le signal d'appariement peut ne pas différer du signal utilisé dans les étapes précédentes, mais être interprété comme un signal d'appariement. Ceci peut par exemple être le cas lorsque le sous-ensemble ne comporte plus qu'un récepteur, dans un algorithme de parcours où le cardinal du sous-ensemble décroît à chaque itération.

Sinon, on passe de l'étape 64 à l'étape 68. A l'étape 68, un nouveau sous-ensemble est défini. Ce sous-ensemble peut être défini en fonction de la réponse transmise par l'émetteur. On repasse ensuite à l'étape 62, avec le nouveau sous-ensemble.

Un exemple de ce procédé est un parcours dichotomique dans un arbre binaire dont les feuilles sont les récepteurs. A la première itération, le sous-ensemble comprend la moitié des récepteurs. A une itération donnée, l'installateur envoie avec l'émetteur un signal - par exemple de montée - si le récepteur à apparier a transmis le signal; sinon, l'installateur envoie un signal de descente. Le sous-ensemble suivant est alors formé de la moitié du sous-ensemble précédent dans le cas d'un signal de montée, et de la moitié du complémentaire dans le cas d'un signal de descente. Lorsque l'on arrive à une feuille de l'arbre, on émet un signal d'appariement - par exemple une pression des touches montée et descente; alternativement, le procédé peut détecter par le nombre d'itération que la feuille a été atteinte, de sorte que la pression de la touche montée ou descente, comme précédemment, provoque l'appariement.

Dans cet exemple, l'étape de définition d'un nouveau sous-ensemble comprend la définition d'un nouveau sous-ensemble de cardinal inférieur au précédent. Ceci n'est pas indispensable, comme le montre l'exemple de la figure 2.

Dans cet exemple de parcours dichotomique, l'étape de définition d'un nouveau sous-ensemble comprend
- la définition d'un nouveau sous-ensemble inclus dans le sous-ensemble précédent si le récepteur à apparier a fourni le signal et
- la définition d'un nouveau sous-ensemble disjoint du sous-ensemble précédent si le récepteur à apparier n'a pas fourni le signal.
On arrive ainsi à parcourir l'arbre ou le graphe. Cette contrainte de définition d'un nouveau sous-ensemble s'applique aussi à d'autres algorithmes de parcours.Du point de vue matériel, la figure 4 montre une vue schématique d'un opérateur 44, dans lequel le récepteur est intégré. On a représenté la partie d'entraînement 46 de l'opérateur et le récepteur 48 qui commande la partie d'entraînement. Le récepteur 48 présente un circuit 50 de réception et décodage des commandes et une unité de traitement logique 52 avec une mémoire associée 54. Cette unité de traitement logique est par exemple un microprocesseur; la mémoire contient un programme susceptible d'être exécuté dans le microprocesseur et qui exécute les étapes mentionnées plus haut. Dans l'exemple, le signal est fourni par l'opérateur en actionnant d'une façon ou d'une autre la partie d'entraînement. La mémoire sert aussi au stockage du numéro de l'émetteur. Si le récepteur peut communiquer avec d'autres récepteurs, le circuit 50 est aussi susceptible d'émettre à destination d'autres récepteurs.

Bien entendu, l'invention n'est pas limitée aux modes de réalisation donnés plus haut. Ainsi, le nombre de numéros dans la liste peut différer du nombre donné à titre d'exemple. Il est possible d'utiliser toute forme ou tout ordre dans la liste, dès lors que la liste définit un ordre dans lequel les récepteurs ou opérateurs doivent émettrent un signal. Le "premier" récepteur à émettre un signal pourrait ainsi être celui présentant le numéro le plus élevé dans la liste. On notera que le balayage des numéros d'ordre peut varier, en croissant ou en décroissant.

Dans les exemples décrits plus haut, les émetteurs et les récepteurs utilisent une fréquence unique; les émetteurs sont identifiés par un numéro unique, transmis avec les commandes émises. Le procédé s'applique aussi bien dans le cas où les émetteurs émettent chacun sur une fréquence distincte, ou par sauts de fréquences, ou avec des modulations différentes. En fait, le procédé s'applique dès lors que l'émetteur est susceptible d'être identifié par les récepteurs - indépendamment de la façon dont cette identification est réalisée.

On a utilisé les mots "récepteurs" et "opérateurs", qui s'appliquent notamment à l'exemple des opérateurs de volets roulants. Le récepteur et l'opérateur peuvent être des éléments distincts, ou alors former un ensemble unique.

Dans les exemples, tous les récepteurs se voient affecter un rang. On pourrait aussi procéder différemment, en séparant les récepteurs en sous-groupes, et en ne traitant qu'un groupe à la fois. Ceci permet, même dans le cas d'installations avec de nombreux récepteurs, d'utiliser le procédé de la figure 2. Toutefois, à l'intérieur de chaque sous-groupe, ceci revient à appliquer le procédé : chaque récepteur du sous groupe reçoit un rang. Dans les exemples, le rang est un rang absolu, représenté par un nombre dans une liste. On peut utiliser d'autres formes de représentation du rang, et d'autres méthodes d'ordonnancement. Par exemple, dans le cas de récepteurs pouvant communiquer, on peut imaginer que l'ordonnancement s'effectue au fur et à mesure de l'émission des signaux. Chaque récepteur n'ayant pas encore fourni de signal à l'attention de l'installateur pourrait émettre une commande vers les autres récepteurs après une durée brève et aléatoire, pour indiquer qu'il va émettre un signal vers l'installateur; dans ce cas, le premier récepteur émet le signal vers l'installateur, et les autres récepteurs attendent le rang suivant.

## Revendications

1. Un procédé d'appariement d'un émetteur (18) et d'un récepteur parmi au moins deux récepteurs (10, 12, 14, 16), l'émetteur étant adapté à transmettre une commande, chaque récepteur étant adapté à recevoir cette commande et identifier l'émetteur et à fournir un signal destiné à un installateur, le procédé comprenant:
(a) une étape (60) de définition d'un sous-ensemble parmi l'ensemble des récepteurs ;
(b) une étape (62) de fourniture du signal par chaque récepteur du sous-ensemble ;
(c) si seul le récepteur à apparier a fourni le signal, une étape de transmission (64) d'une commande par l'émetteur et d'appariement (66) du récepteur ayant fourni le signal et de l'émetteur ayant transmis la commande, et sinon, une étape (68) de définition d'un nouveau sous-ensemble, l'étape de définition d'un nouveau sous-ensemble étant suivie d'une itération des étapes (b) et (c), ledit procédé **caracterisé en ce qu'**il comprend en outre une étape (30) d'affectation à chaque récepteur d'un numéro d'ordre pour l'envoi du signal, l'étape de définition (60) d'un sous-ensemble comprenant le choix d'un récepteur d'un numéro d'ordre donné, l'étape de définition (68) d'un nouveau sous-ensemble comprenant le choix d'un récepteur d'un autre numéro d'ordre.

2. Le procédé de la revendication 1, **caractérisé en ce que** l'étape (68) de définition d'un nouveau sous-ensemble comprend la définition d'un nouveau sous-ensemble de cardinal inférieur au précédent.

3. Le procédé de la revendication 1 ou 2, **caractérisé en ce que** l'étape (68) de définition d'un nouveau sous-ensemble comprend :
- la définition d'un nouveau sous-ensemble inclus dans le sous-ensemble précédent si le récepteur à apparier a fourni le signal et
- la définition d'un nouveau sous-ensemble disjoint du sous-ensemble précédent si le récepteur à apparier n'a pas fourni le signal.

4. Le procédé de la revendication 1, 2 ou 3, **caractérisé en ce que** les récepteurs (10, 12, 14, 16) sont représentés par les feuilles d'un arbre.

5. Le procédé de la revendication 4, **caractérisé en ce que** les étapes (a), (b) et (c) s'effectuent suivant un parcours dichotomique dans l'arbre.

6. Le procédé de la revendication 1, **caractérisé en ce que** l'étape d'affectation (30) comprend, pour chaque récepteur, le choix d'un numéro d'ordre indépendamment des autres récepteurs.

7. Le procédé de la revendication 1, **caractérisé en ce que** le choix est aléatoire.

8. Le procédé de la revendication 1, **caractérisé en ce que** les récepteurs peuvent communiquer, et **en ce que** l'étape d'affectation (30) comprend l'affectation d'un numéro distinct à chaque récepteur.

9. Le procédé de la revendication 8, **caractérisé en ce que** les numéros distincts sont consécutifs.

10. Le procédé de l'une des revendications 1 ou 6 à 9, **caractérisé en ce que** l'étape de changement de numéro d'ordre (38) comprend la transmission par l'émetteur d'une commande de changement de numéro d'ordre.

11. Le procédé de l'une des revendications 1 ou 6 à 10, **caractérisé en ce que** l'émetteur comprend un numéro d'identification unique transmis dans une commande et **en ce que** l'étape d'appariement (66) comprend le stockage par le récepteur du numéro contenu dans la commande.

12. Le procédé de la revendication 1, **caractérisé en ce que** le récepteur peut communiquer avec d'autres récepteurs, et **en ce que** l'étape (30) d'affectation comprend une communication vers d'autres récepteurs et la réception éventuelle des réponses des autres émetteurs.

13. Le procédé de la revendication 1 ou 12, **caractérisé en ce que** l'étape (32) de fourniture du signal comprend la réception d'au moins une commande de changement de numéro d'ordre et la fourniture du signal en fonction du nombre de commandes de changement de numéro d'ordre reçues.

14. Le procédé de l'une quelconque des revendications 1 ou 12 à 13, **caractérisé en ce que** la commande transmise par un émetteur comprend un numéro d'identification unique et **en ce que** l'étape (40) d'appariement comprend le stockage du numéro contenu dans la commande.

15. Un récepteur, présentant :
- un circuit (50) de réception et de décodage de commandes transmises par un émetteur ;
- des moyens pour fournir un signal destiné à un installateur ;
- un programme exécutant le procédé d'une des revendications 1 ou 12 à 14.

16. Le récepteur de la revendication 15, **caractérisé en ce que** le récepteur comprend une mémoire de stockage (54).

17. Le récepteur de la revendication 15 ou 16, **caractérisé en ce que** le circuit (50) est aussi adapté pour émettre.

## Patentansprüche

1. Verfahren zum Matching eines Senders (18) und eines Empfängers aus mindestens zwei Empfängern (10, 12, 14, 16), wobei der Sender dazu geeignet ist, einen Befehl zu übertragen, wobei jeder Empfänger dazu geeignet ist, diesen Befehl zu empfangen und den Sender zu identifizieren, und dazu, ein Signal zu liefern, das für einen Installateur bestimmt ist, wobei das Verfahren umfasst:
(a) einen Schritt (60) des Definierens eines Teilsatzes aus dem Satz der Empfänger;
(b) einen Schritt (62) des Lieferns des Signals durch jeden Empfänger des Teilsatzes;
(c) wenn nur der Empfänger, der gematcht werden soll, das Signal geliefert hat, einen Schritt des Übertragens (64) eines Befehls durch den Sender, und des Matchings (66) des Empfängers, der das Signal geliefert hat, und des Senders, der den Befehl übertragen hat, und wenn nicht, einen Schritt (68) des Definierens eines neuen Teilsatzes, wobei dem Schritt des Definierens eines neuen Teilsatzes eine Iteration der Schritte (b) und (c) folgt, wobei das Verfahren **dadurch gekennzeichnet ist, dass** es weiter einen Schritt (30) des Zuweisens, zu jedem Empfänger, einer Ordnungsnummer für das Senden des Signals umfasst, wobei der Schritt des Definierens (60) eines Teilsatzes die Auswahl eines Empfängers mit einer gegebenen Ordnungsnummer umfasst, wobei der Schritt des Definierens (68) eines neuen Teilsatzes die Auswahl eines Empfängers mit einer anderen Ordnungsnummer umfasst.

2. Verfahren nach Anspruch 1, **dadurch gekennzeichnet, dass** der Schritt (68) des Definierens eines neuen Teilsatzes das Definieren eines neuen Teilsatzes von kleinerem Kardinale als dem vorhergehenden umfasst.

3. Verfahren nach Anspruch 1 oder 2, **dadurch gekennzeichnet, dass** der Schritt (68) des Definierens eines neuen Teilsatzes umfasst:
- Definieren eines neuen Teilsatzes, der im vorhergehenden Teilsatz eingeschlossen ist, wenn der Empfänger, der gematcht werden soll, das Signal geliefert hat, und
- Definieren eines neuen Teilsatzes, der vom vorhergehenden Teilsatz getrennt ist, wenn der Empfänger, der gematcht werden soll, das Signal nicht geliefert hat.

4. Verfahren nach Anspruch 1, 2 oder 3, **dadurch gekennzeichnet, dass** die Empfänger (10, 12, 14, 16) von den Blättern eines Baums dargestellt werden.

5. Verfahren nach Anspruch 4, **dadurch gekennzeichnet, dass** die Schritte (a), (b) und (c) einer dichotomen Strecke im Baum gemäß erfolgen.

6. Verfahren nach Anspruch 1, **dadurch gekennzeichnet, dass** der Schritt des Zuweisens (30) für jeden Empfänger die Auswahl einer Ordnungsnummer unabhängig von den anderen Empfängern umfasst.

7. Verfahren nach Anspruch 1, **dadurch gekennzeichnet, dass** die Auswahl zufällig ist.

8. Verfahren nach Anspruch 1, **dadurch gekennzeichnet, dass** die Empfänger kommunizieren können, und dadurch, dass der Schritt des Zuweisens (30) das Zuweisen einer unterschiedlichen Nummer zu jedem Empfänger umfasst.

9. Verfahren nach Anspruch 8, **dadurch gekennzeichnet, dass** die unterschiedlichen Nummern aufeinanderfolgend sind.

10. Verfahren nach einem der Ansprüche 1 oder 6 bis 9, **dadurch gekennzeichnet, dass** der Schritt des Änderns der Ordnungsnummer (38) das Übertragen eines Ordnungsnummern-Änderungsbefehls durch den Sender umfasst.

11. Verfahren nach einem der Ansprüche 1 oder 6 bis 10, **dadurch gekennzeichnet, dass** der Sender eine eindeutige Identifikationsnummer umfasst, die in einem Befehl übertragen wird, und dadurch, dass der Schritt des Matchings (66) das Speichern der im Befehl enthaltenen Nummer durch den Empfänger umfasst.

12. Verfahren nach Anspruch 1, **dadurch gekennzeichnet, dass** der Empfänger mit anderen Empfängern kommunizieren kann, und dadurch, dass der Schritt (30) des Zuweisens eine Kommunikation zu anderen Empfängern hin, und das eventuelle Empfangen der Antworten der anderen Sender umfasst.

13. Verfahren nach Anspruch 1 oder 12, **dadurch gekennzeichnet, dass** der Schritt (32) des Lieferns des Signals das Empfangen von mindestens einem Ordnungsnummern-Änderungsbefehl, und das Liefern des Signals in Abhängigkeit von der Anzahl der empfangenen Ordnungsnummern-Änderungsbefehle umfasst.

14. Verfahren nach einem der Ansprüche 1 oder 12 bis 13, **dadurch gekennzeichnet, dass** der von einem Sender übertragene Befehl eine eindeutige Identifikationsnummer umfasst, und dadurch, dass der Schritt (40) des Matchings das Speichern der im Befehl enthaltenen Nummer umfasst.

15. Empfänger, aufweisend:
- eine Schaltung (50) zum Empfangen und zum Decodieren von Befehlen, die von einem Sender übertragen werden;
- Mittel, um ein Signal zu liefern, das für einen Installateur bestimmt ist;
- ein Programm, welches das Verfahren nach einem der Ansprüche 1 oder 12 bis 14 ausführt.

16. Empfänger nach Anspruch 15, **dadurch gekennzeichnet, dass** der Empfänger einen Speicher (54) umfasst.

17. Empfänger nach Anspruch 15 oder 16, **dadurch gekennzeichnet, dass** die Schaltung (50) ebenfalls dafür geeignet ist, zu senden.

## Claims

1. A method for matching a transmitter (18) and a receiver among at least two receivers (10, 12, 14, 16), the transmitter being adapted to transmit a command, each receiver being adapted to receive this command and identify the transmitter and to provide a signal intended for an installer, the method comprising: (a) a step of defining (60) a subset among the set of receivers; (b) a step of providing (62) the signal by each receiver of the subset; (c) if only the receiver to be matched has provided the signal, a step of transmitting (64) a command by the transmitter and of matching (66) the receiver having provided the signal and the transmitter having transmitted the command, and if not, a step of defining (68) a new subset, the step of defining a new subset being followed by an iteration of steps (b) and (c), said method being **characterized in that** it further comprises a step of assigning (30) to each receiver a serial number for sending the signal, the step of defining (60) a subset comprising the choice of a receiver of a given serial number, the step of defining (68) a new subset comprising the choice of a receiver of another serial number.

2. The method of claim 1, **characterized in that** the step of defining (68) a new subset comprises the definition of a new cardinal subset smaller than the previous one.

3. The method of claim 1 or 2, **characterized in that** the step of defining (68) a new subset comprises:
- the definition of a new subset included in the previous subset if the receiver to be matched has provided the signal, and
- the definition of a new subset disjoined from the previous subset if the receiver to be matched has not provided the signal.

4. The method of claim 1, 2 or 3, **characterized in that** the receivers (10, 12, 14, 16) are represented by the leaves of a tree.

5. The method of claim 4, **characterized in that** steps (a), (b) and (c) are performed following a dichotomous path in the tree.

6. The method of claim 1, **characterized in that** the assignment step (30) comprises, for each receiver, the choice of a serial number independently of the other receivers.

7. The method of claim 1, **characterized in that** the choice is random.

8. The method of claim 1, **characterized in that** the receivers may communicate, and **in that** the assigning step (30) comprises the assignment of a distinct number to each receiver.

9. The method of claim 8, **characterized in that** the distinct numbers are consecutive.

10. The method of any of claims 1 or 6 to 9, **characterized in that** the step of changing a serial number (38) comprises the transmission by the transmitter of a serial number change command.

11. The method of any of claims 1 or 6 to 10, **characterized in that** the transmitter comprises a unique identification number transmitted in a command and **in that** the matching step (66) comprises the storage by the receiver of the number contained in the command.

12. The method of claim 1, **characterized in that** the receiver may communicate with other receivers, and **in that** the assignment step (30) comprises a communication to other receivers and the possible receipt of the responses from the other transmitters.

13. The method of claim 1 or 12, **characterized in that** the step of providing (32) the signal comprises the receipt of at least one serial number change command and the provision of the signal depending on the number of received serial number change commands.

14. The method of any one of claims 1 or 12 to 13, **characterized in that** the command transmitted by a transmitter comprises a unique identification number and **in that** the matching step (40) comprises the storage of the number contained in the command.

15. A receiver, having:
- a circuit (50) for receiving and decoding commands transmitted by a transmitter;
- means for providing a signal intended for an installer;
- a program executing the method of any of claims 1 or 12 to 14.

16. The receiver of claim 15, **characterized in that** the receiver comprises a storage memory (54).

17. The receiver of claim 15 or 16, **characterized in that** the circuit (50) is also adapted for emission.
